# EUROPEAN PATENT APPLICATION

(11) **EP 2 290 505 A1**
(43) Date of publication of application: **02.03.2011**
(21) Application number: 09179142.6
(22) Date of filing: 14.12.2009
(51) Int. Cl.: G06F 3/03

(54) **Optical device**

(30) Priority: 20.08.2009 TW 98128069
(71) Applicant: Arima Lasers Corp., Dashi Township, Taoyuan County 335 (TW)
(72) Inventor: Lee, Hung-Sheng, 335 Taoyuan County (TW); Chen, Chih-Cheng, 335 Taoyuan County (TW); Chuang, Tsai-Yu, 335 Taoyuan County (TW); Lin, Ching-Hui, 105 Taipei City (TW); Lai, Sheng-Ping, 335 Taoyuan County (TW)
(74) Representative: Lang, Christian

(57) **Abstract**

An optical device is disclosed. The optical device includes a first packaging unit and a second packaging unit. The first packaging unit includes a first lead frame and a sensor electrically coupled to the first lead frame. The second packaging unit includes an emitting die and a second lead frame. The emitting die has an optical axis and is operable to emit a light. The second lead frame has a first portion disposed within the second packaging unit and a second portion extending into the first packaging unit so that an angle of about 5-85 degrees is formed between the optical axis of the emitting die and the sensing plane of the sensor.

## Description

### RELATED APPLICATIONS

This application claims priority to Taiwan Application Serial Number 98128069, filed August 20, 2009, which is herein incorporated by reference.

### BACKGROUND

### Field of Invention

The present disclosure generally relates to an optical device. More particularly, the present disclosure relates to an optical device for use in an optical mouse.

### Description of Related Art

Optical mice have replaced mechanical mice and become the major product in the market. Compared with the conventional pointing device, the optical mouse is advantageous in many aspects. For one thing, the optical mouse is more precise in positioning. For another thing, the optical mouse does not require cleaning or maintenance other than removing debris that might be collected under the light emitter. Also, the optical mouse does not seriously abrade the surface upon which it is used. Moreover, the optical mouse has relatively higher mechanical strength so that it does not breakdown easily. The optical mouse typically includes a light emitting diode (LED), a lens assembly, a sensing die and an optical engine. Typically, the LED is disposed at the bottom of an optical mouse, and a light emitted from the LED is projected onto a surface (e.g. a table) with a tilt angle, and forms a "shadow picture" on the surface. Simultaneously, the sensor of the optical mouse captures a series of "shadow pictures" in time sequence. These shadow pictures are transmitted to a digital signal processor (DSP) for further analysis. Thereby, the moving direction and displacement of the optical mouse can be determined while the optical mouse is still moving.

In a laser mouse, a laser source is adapted to take the place of the LED. The approach in capturing images by a laser mouse differs from that of a typical optical mouse. While the laser light illuminates an object, an interference pattern is produced on the surface of the object. For example, a constructive interference would produce luminescent spots whereas a destructive interference would produce dim spots. Therefore, the images captured by a laser mouse may be of higher contrast than those captured by a conventional optical mouse.

Early days, an optical mouse contains a light source, a sensor, and a light guide device, which are individually installed on a circuit board. The light guide device includes a prism and a lens. The prism is operable to refract the light emitted from the light source to a tabletop, and the lens is operable to collect and direct the light reflected from the table to the sensor.

Alternatively, both the light source and the sensor are integrated in a single device where the light source and the sensor are positioned on the same plane. The appearance of this single device is like an IC packaging unit, but an additional prism disposed below the light source is required. The light emitted from the light source reaches the tabletop through the refraction of the prism.

The optical mouse designed as described above (i.e., refracting approach) has limited production tolerance and thereby increases the difficulty in product assembly and further lowers the production yield. Therefore, there exists in this art a need of an improved device that overcomes the above mentioned problems.

### SUMMARY

The present disclosure provides an optical device that may simplify the optical and mechanical design in an optical mouse. Also, the present disclosure provides an optical device that may be applied in various types of optical mouse.

According to one aspect of the present disclosure, the optical device includes a first packaging unit and a second packaging unit. The first packaging unit has a first opening thereon, and includes a first lead frame and a sensor. The sensor has a sensing plane that electrically couples to the first lead frame, and the sensing plane is positioned in such a way that it is exposed through the first opening. The second packaging unit has a second opening thereon, and includes an emitting die and a second lead frame. The emitting die having an optical axis is capable of emitting a light, and is positioned in such a way that it is exposed through the second opening. The second lead frame has a first portion disposed within the second packaging unit and a second portion extending into the first packaging unit in such a way that an angle of about 5-85 degrees is formed between the optical axis of the emitting die and the sensing plane of the sensor.

According to one embodiment of the present disclosure, the optical device may further include a base. The base has a groove and a fastener, wherein the fastener is operable to fasten the first packaging unit onto the base, whereas the groove is operable to accommodate the second packaging unit, which is inserted into the base. In one example, the inclined angle of the groove relative to a horizontal surface of the base is equal to the angle between the optical axis of the emitting die and the sensing plane of the sensor. The optical device may further include a first lens disposed on the base in the vicinity of the emitting die for directing the light to an article. Moreover, the optical device may further comprise a second lens disposed on the base in the vicinity of the sensor so that the second lens is operable to direct a light reflected from the article to the sensor. According to one example of the present disclosure, the base is made of a material transparent to infrared light. Examples of the material transparent to infrared light include but are not limited toacrylic resins, epoxy resins, polycarbonate, and polystyrene.

According to one example of the present disclosure, the first packaging unit may further include a protrusion, and the base may further include a matching recess for fitting the protrusion so as to couple the first packaging unit to the base.

According to one example of the present disclosure, the emitting die is any one of a vertical cavity surface emitting laser, an edge emitting laser diode and a light emitting diode.

According to another embodiment of the present disclosure, the second portion of the second lead frame may further extend out of the first packaging unit.

According to still another example of the present disclosure, the optical device may further comprise a Zener diode electrically connected in parallel to the emitting die.

According to one example of the present disclosure, the optical device may further include a third lead frame having a first portion disposed within the second packaging unit and a second portion disposed outside the second packaging unit, and wherein the second portion of the third lead frame extends into the first packaging unit.

According to another example of the present disclosure, both the Zener diode and the emitting die are disposed on the first portion of the second lead frame, and both the Zener diode and the emitting die are electrically coupled to the third lead frame.

According to one embodiment of the present disclosure, the first lead frame may include a metal such as Cu, Al, Fe, Ag, or Au.

According to one embodiment of the present disclosure, the sensor may be a complementary metal oxide semiconductor sensor or a charge coupling device sensor.

According to another aspect of the present disclosure, the optical device includes a first packaging unit and a second packaging unit. The first packaging unit has a first lens thereon, and includes a first lead frame and a sensor. The sensor has a sensing plane that electrically couples to the first lead frame and positioned in the vicinity of the first lens for receiving an incident light from the first lens. The second packaging unit has a second lens thereon, and includes an emitting die and a second lead frame. The emitting die having an optical axis is operable to emit a light, and is positioned in the vicinity of the second lens for directing the light to an article. The second lead frame has a first portion disposed within the second packaging unit and a second portion extending into the first packaging unit and thereby forms an angle of about 5 - 85 degrees between the optical axis of the emitting die and the sensing plane of the sensor.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a perspective view of an optical device according to one embodiment of the present disclosure;
Fig. 2 is another perspective view of the optical device illustrated in Fig. 1 viewing from another angle:

Fig. 3 is a perspective view of an optical device according to another embodiment of the present disclosure;
Fig. 4a and 4b are perspective views of an optical device according to another embodiment of the present disclosure; and
Fig. 5 is a perspective view of an optical device according to another embodiment of the present disclosure.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

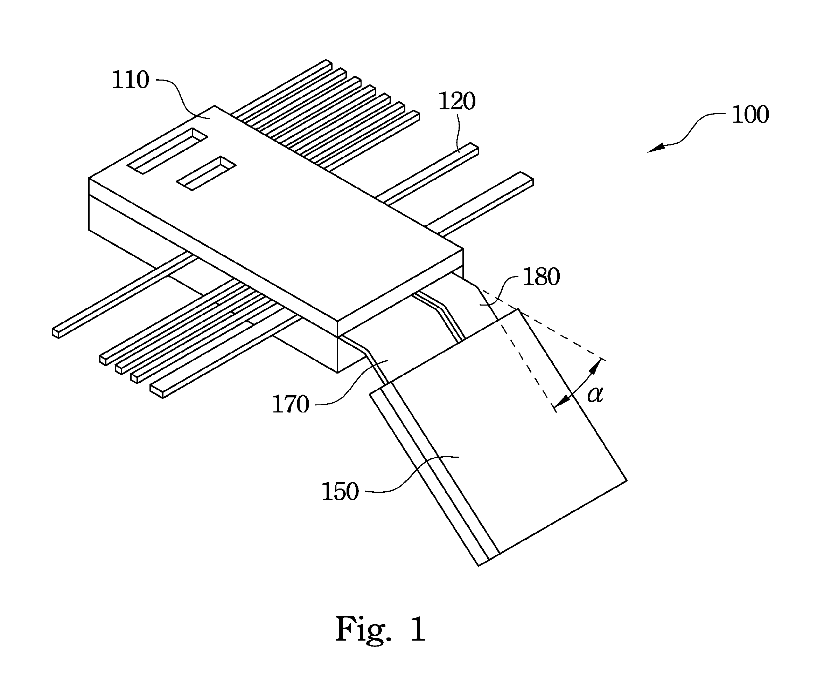

Referring to Fig. 1, which is a perspective view of an optical device 100 according to one embodiment of the present disclosure. The optical device 100 includes a first packaging unit 110 and a second packaging unit 150, and the first packaging unit 110 and the second packaging unit 150 are disposed to have an inclined angle α therebetween.

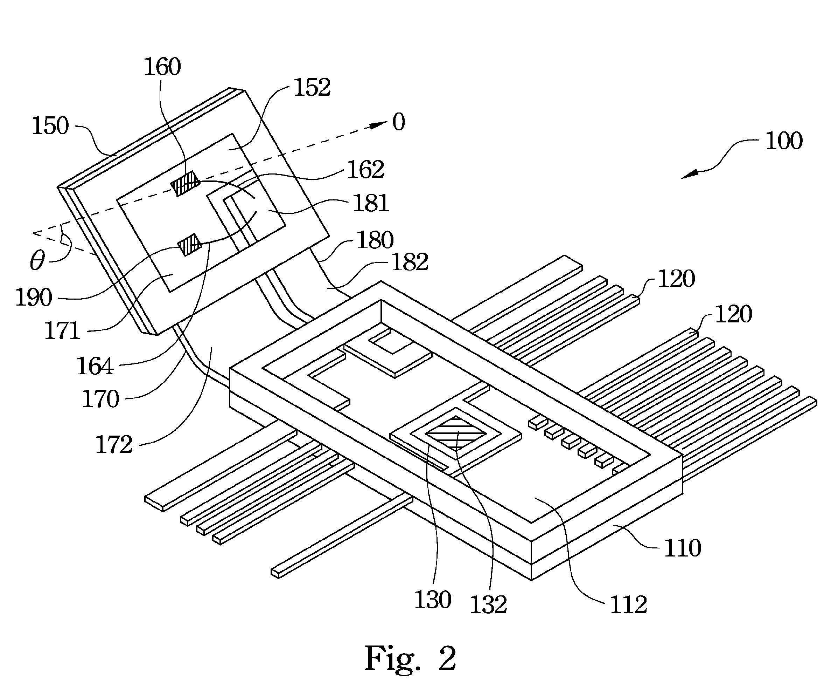

Referring to Fig. 2, which is another perspective view of the optical device 100 illustrated in Fig. 1 viewing from another angle. The first packaging unit 110 has a first opening 112 thereon, and further includes a first lead frame 120 and a sensor 130.

The first lead frame 120 within the first packaging unit 110 extends out of the first packaging unit 110 and connects to an external circuit. In one embodiment, the first lead frame 120 comprises a metal that is any one of copper, aluminum, iron, silver, and gold. In another embodiment, the first lead frame 120 is made of iron having gold, aluminum or copper coated thereon.

The sensor 130 has a sensing plane 132 which electrically couples to the first lead frame 120 and is positioned to be exposed through the first opening 112. In one example, the sensor 130 is connected to the first lead frame 120, and the sensing plane 132 of the sensor 130 is positioned toward the first opening 112. In another example, a plurality of electrical pads (not shown) are disposed on the periphery of the sensing plane 132 of the sensor 130, and the electrical pads may electrically couple to the first lead frame 120 by metal wires (not shown). In other examples, the sensor 130 may be a complementary metal oxide semiconductor sensor (CMOS) or charge coupled device (CCD) for detecting a light reflected from an article.

The second packaging unit 150 includes an emitting die 160 and a second lead frame 170, and the second packaging unit 150 has a second opening 152 thereon, and the emitting die160 may be exposed through the second opening 152.

The emitting die 160 is capable of emitting a light that is transmitted out of the second packaging unit 150 through the second opening 152. In one example, the emitting die 160 may be a vertical cavity surface emitting laser, an edge emitting laser diode or a light emitting diode. The emitting die 160 has an optical axis O along the direction of the light emitted. In one example, the optical axis O is substantially normal to a surface of the emitting die 160, as shown in Fig. 2. In some examples, the wavelength of the light emitting from the emitting die 160 is about 400 nm to about 1000 nm.

The second lead frame 170 has a first portion 171 disposed inside the second packaging unit 150 and a second portion 172 extending into the first packaging unit 110. The second lead frame 170 may be fabricated from a flexible material, and thus the first packaging unit 110 may be inclined relative to the second packaging unit 150 by an angle α. More specifically, an angle θ of about 5-85 degrees may be formed between the optical axis O of the emitting die 160 and the sensing plane 132 of the sensor130. For example, the angle θ may be 10, 35, 50 or 75 degrees. In one example, the second portion 172 of the second lead frame 170 extends into the first packaging unit and further extends out of the first packaging unit 110 along the lateral direction of the first packaging unit 110. In one example, the material of the second lead frame 170 may be the same as the first lead frame 120, and the second lead frame 170 may electrically couple to the emitting die 160.

In one embodiment, the optical device 100 further includes a third lead frame 180, which has a first portion 181 disposed in the second packaging unit 150 and a second portion 182 extending out of the second packaging unit 150. In particular, the second portion 182 of the third lead frame 180 extends into the first packaging unit 110 and further extends out of the first packaging unit 110.

As mentioned above, in one embodiment, one side of the emitting die 160 (such as P-type side or N-type side) is coupled to the first portion 171 of the second lead frame 170, and the other side of the emitting die 160 is electrically coupled to the third lead frame 180. For instance, one side of the emitting die 160 may couple to the third lead frame by a metal wire 162. Thereby, electrical energy or signals may be transmitted to the emitting die 160 from the second lead frame and the third lead frame 180 which extends out of the first packaging unit 110.

In one embodiment, the optical device 100 further includes a Zener diode 190 connected in parallel to the emitting die 160. For example, each of the emitting die 160 and the Zener diode 190 has one side coupled to the first portion 171 of the second lead frame 170, and the other side coupled to the first portion 181 of the third lead frame 180 by metal wires 162, 164.

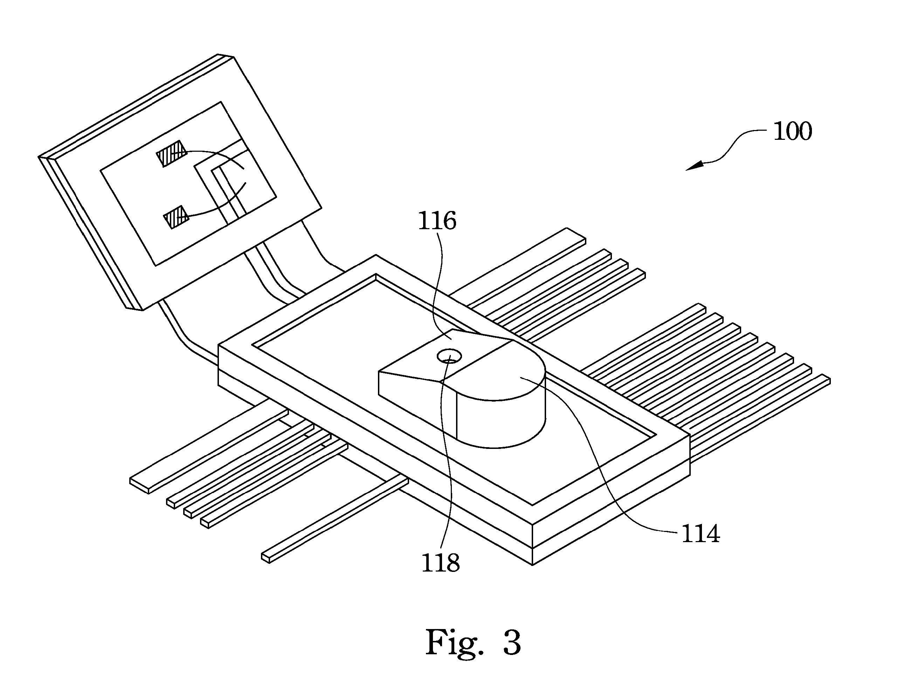

Referring to Fig. 3, which is a perspective view of the optical device 100 according to one embodiment of the present disclosure. In this embodiment, the first packaging unit 110 of the optical device 100 includes a protrusion 114. The protrusion 114 is characterized in having an inclined plane 116 and an opening 118. A reflected light from an article (not shown) may be transmitted to the sensor 130 in the first packaging unit 110 through the opening 118. For example, the opening 118 may be positioned on the inclined plane 116 or other suitable location(s).

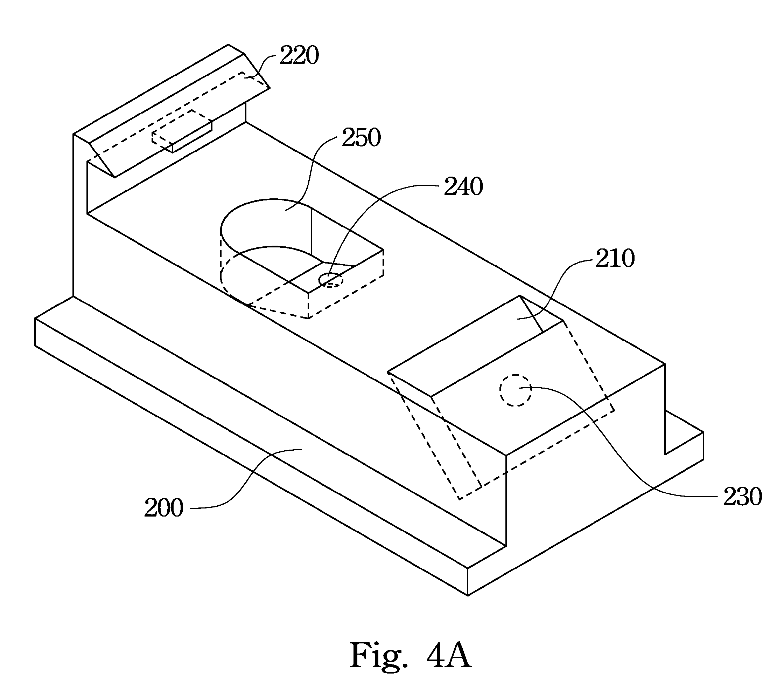

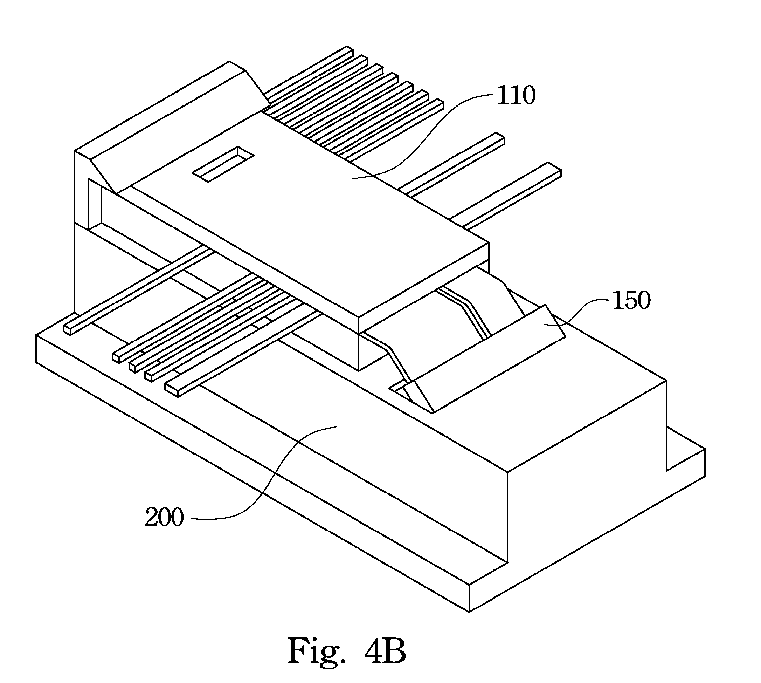

In one embodiment, the optical device 100 may further include a base 200 for holding the first packaging unit 110 and the second packaging unit 150, as illustrated in Fig. 4a and Fig. 4b. The base 200 has a fastener 220, a groove 210 and a recess 250. The fastener 220 may fix the first packaging unit 110 on the base 200. For example, the fastener may be a tenon that joints to the upper surface of the first packaging unit 110 to fix the first packaging unit 110 on the base 200. The groove 210 may accommodate the second packaging unit 150. For example, the recess 250 may have a shape complementary to the protrusion114 of the first packaging unit 110, and hence it may hold the protrusion114 in place. As such, the first packaging unit 110 and the second packaging unit 150 may be fixed on the base 200, and keep the inclined angle α constant. Therefore, the angle θ between the optical axis O of the emitting die 160 and the sensing plane 132 of the sensor130 in the second packaging unit 150 is also fixed. The base 200 may be fabricated from an IR- or a visible light-transmissible material, such as acrylic resin, epoxy resin, polycarbonate or polystyrene.

In one embodiment, a first lens 230 and a second lens 240 are both disposed on the base 200. The first lens 230 may be disposed on the base 200 in the vicinity of the emitting die 160 so that the first lens 230 may direct the light emitted to an external article (not shown). The second lens 240 may be disposed on the base 200 in the vicinity of the sensor 130 so that the second lens 240 is operable to direct a light reflected from the external article to the sensor 130.

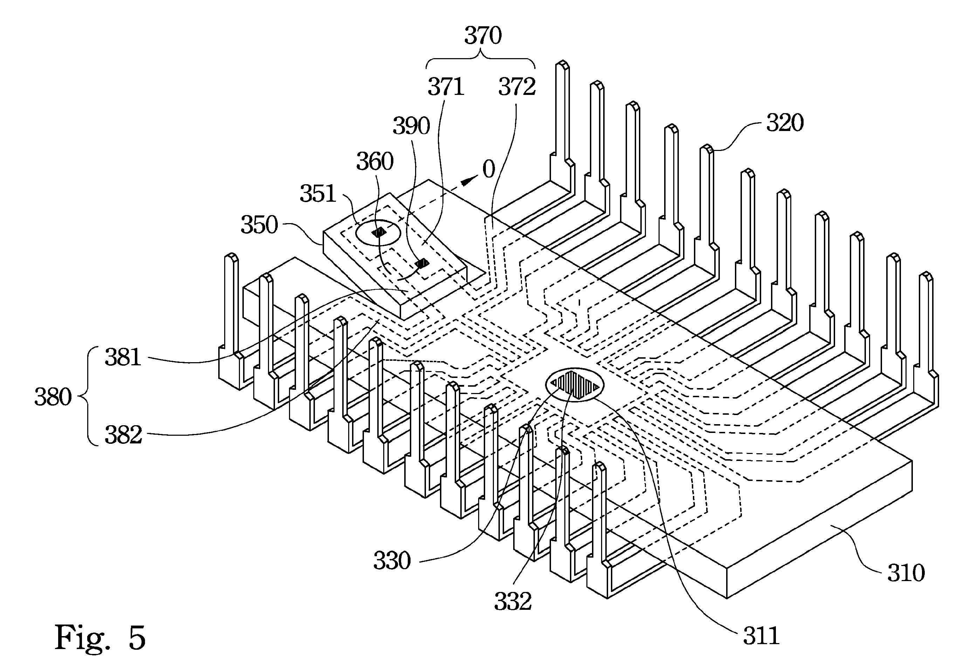

Referring to Fig. 5, which is a perspective view of an optical device 300 according to another embodiment of the present disclosure. The optical device 300 includes a first packaging unit 310 and a second packaging unit 350. The first packaging unit 310 has a substantially U-shaped contour. The second packaging unit 350 is disposed in such a way that it forms an inclined angle relative to the first packaging unit 310.

As shown in Fig. 5, the first packaging unit 310 has a first lens 311 disposed thereon, and includes a first lead frame 320 and a sensor 330.

The first lens 311 is positioned on the surface of the first packaging unit 310 in the vicinity of the sensor 330 so that the first lens 311 is operable to receive an incident light and direct the incident light to the sensor 330. In one embodiment, the first lens may be a convex lens. In another embodiment, the first lens 311 and the housing of the first packaging unit 310 are made of the same transparent material. In other embodiments, the first lens 311 and the housing of the first packaging unit 310 may be fabricated as a whole using the resin transfer molding (RTM) technology (also known as "surface encapsulation", and is usually used in the process of SMD type of LED), and thus the first lens 311 and the housing of the first packaging unit 310 may be formed from a single piece of material.

The sensor 330 has a sensing plane 332 thereon, and the sensing plane 332 is substantially located in the vicinity of the first lens 311 so that the first lens 311 may receive and detect a light from the first lens 311. In one embodiment, the sensor 330 is disposed on the first lead frame 320, and the sensing plane 132 of the sensor 130 is disposed to face the first lens 311. In addition, the sensing plane 332 may electrically couple to the first lead frame 320 so that it may transmits the signal detected by the sensing plane 332 to the first lead frame 320.

The first lead frame 320 extends from the interior of the first packaging unit 310 to the exterior of the first packaging unit 310 so that the first lead frame 320 may be connected to an external circuit (not shown). For instance, the signal detected by the sensor 330 may be transmitted through the first lead frame 320 to a signal processing unit (not shown). In one embodiment, the first lead frame 120 comprises a metal material such as copper, aluminum, iron, silver or gold. In another embodiment, the first lead frame 120 is fabricated form iron coated with either gold, aluminum or copper.

The second packaging unit 350 has a second lens 351 disposed thereon, and includes a second lead frame 320 and a sensor 330.

The emitting die 360 is capable of emitting a light, and has an optical axis O along the direction of the light emitted. The light emitted from the emitting die 360 may be transmitted through the second lens 351 to the exterior of the second packaging unit 350. In one embodiment, the optical axis O is substantially normal to a surface of the emitting die. In one embodiment, the emitting die 160 may be a vertical cavity surface emitting laser, edge emitting laser diode or light emitting diode

The second lens 351 is positioned on the surface of the second packaging unit 350 in the vicinity of the emitting die 360 so that the second lens 351 may direct the light emitted by the emitting die 360 to an external article (not shown). In one embodiment, the second lens may be a convex lens. In another embodiment, the second lens 351 and the housing of the second packaging unit 350 are made of the same transparent material. For example, the second lens 351 and the housing of second packaging unit 350 may be fabricated by the RTM technology, and thus the first lens 311 and the housing of the first packaging unit 310 are fabricated as a whole.

The second lead frame 370 has a first portion 371 disposed inside the second packaging unit 350 and a second portion 372 extending into the first packaging unit 310. In one embodiment, the second lead frame 370 may be fabricated from a flexible metal material so that the second packaging unit 350 may form an inclined angle relative to the first packaging unit 310. In this way, an angle θ of about 5-85 degrees may be formed between the optical axis O of the emitting die 360 and the sensing plane 332 of the sensor330. In one embodiment, the second portion 372 of the second lead frame 370 not only extends into the first packaging unit but also extends out of the first packaging unit 310 from the lateral side of the first packaging unit 310.

In one embodiment, the optical device 300 further includes a third lead frame 380, which has a first portion 381 disposed in the second packaging unit 350 and a second portion 382 extending outward from the second packaging unit 350. The second portion 382 of the third lead frame 380 extends into the first packaging unit 310 and further extends out of the first packaging unit 310 from the lateral side of the first packaging unit 310.

In one embodiment, the optical device 300 further includes a Zener diode 390 connected in parallel to the emitting die 360. In one embodiment, both the N-type side of the emitting die 160 and the N-type side of the Zener diode 190 may be coupled to the first portion 371 of the second lead frame 370, while the p-type side of the emitting die 160 and P-type side of the Zener diode 190 both may be electrically coupled to the first portion 381 of the third lead frame 380 by metal wires.

From the embodiments described hereinbefore, the present disclosure at least has following characteristics.

While the embodiment of present disclosure is applied in an optical mouse, it is possible to eliminate the need of a prism assembly that is typically used in the prior art. In the present disclosure, an angle is formed between the optical axis of the emitting die and the sensing plane of the sensor. Thus, the light emitted from the emitting die may illuminate a tabletop with an incident angle of larger than 0 degree. Therefore, a prism refracting the light emitted from the emitting die is not required.

The embodiment of the present disclosure may be applied in various types of optical mouse. In the present disclosure, a second lead frame is employed to connect the first packaging unit and the second packaging unit. As such, the inclined angle between the first packaging unit and the second packaging unit may be adjusted to adapt to various types of optical mouse. For example, the incident angle of an emitting light for an optical mouse applied on a glass tabletop differs from an optical mouse applied on other conventional tabletops. Thus, the embodiments of the present disclosure is suitable to be used in various types of optical mouse.

The assembly of both the first and second packaging units may be completed on a plane by conventional process of packaging. After being packaged on a plane by the process of dual In-line package or other methods known in the art, the inclined angle between the first and second packaging units may be adjusted or kept by a workpiece or a base. Therefore, the manufacturing process is robust and convenient.

Applying the embodiment of the present disclosure in an optical mouse may simplify the optical and mechanical design. In one embodiment, the optical lenses are integrated on the surface of the packaging units so as to combine the first lens, the sensor, the second lens, and the emitting die in a single module. Therefore, the optical and mechanical design in an optical mouse is simplified.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. An optical device, comprising:
a first packaging unit having an first opening thereon, comprising:
a first lead frame; and
a sensor having a sensing plane, wherein the sensing plane is electrically coupled to the first lead frame and positioned to be exposed through the first opening; and
a second packaging unit having an second opening thereon, comprising:
an emitting die having an optical axis and capable of emitting a light, wherein the emitting die is positioned to be exposed through the second opening; and
a second lead frame having a first portion disposed inside the second packaging unit and a second portion extending into the first packaging unit such that an angle of about 5-85 degrees is formed between the optical axis of the emitting die and the sensing plane of the sensor.

2. The optical device according to claim1, further comprising a base having a groove and a fastener, wherein the fastener is operable to fasten the first packaging unit onto the base, and the groove is operable to accommodate the second packaging unit, which is inserted into the base.

3. The optical device according to claim 2, further comprising a first lens disposed on the base in the vicinity of the emitting die so that the first lens is operable to direct the light to an article.

4. The optical device according to claim 3, further comprising a second lens disposed on the base in the vicinity of the sensor so that second lens is operable to direct a light reflected from the article to the sensor.

5. The optical device according to claim 2, wherein the base is made of a material transparent to infrared light.

6. The optical device according to claim 1, wherein the second portion of the second lead frame further extends outward from the first packaging unit.

7. The optical device according to claim 1, further comprising a Zener diode and a third lead frame, wherein the third lead frame has a first portion disposed within the second packaging unit and a second portion extending into the first packaging unit, and wherein the Zener diode and the emitting die are disposed on the first portion of the second lead frame, and both the Zener diode and the emitting die electrically connects to the third lead frame.

8. An optical device, comprising:
a first packaging unit having a first lens thereon, comprising:
a first lead frame; and
a sensor having a sensing plane, wherein the sensing plane is electrically coupled to the first lead frame and positioned in the vicinity of the first lens for receiving an incident light from the first lens; and
a second packaging unit having a second lens thereon, comprising:
an emitting die having an optical axis and capable of emitting a light, wherein the emitting die is positioned in the vicinity of the second lens for directing the light to an article; and
a second lead frame having a first portion disposed within the second packaging unit and a second portion extending into the first packaging unit such that an angle of about 5-85 degrees is formed between the optical axis of the emitting die and the sensing plane of the sensor.

9. The optical device according to claim 8, wherein the second portion of the second lead frame further extends outward from the first packaging unit.

10. The optical device according to claim 8, further comprising a a Zener diode and a third lead frame, wherein the third lead frame has a first portion disposed within the second packaging unit and a second portion extending into the first packaging unit, and wherein the Zener diode and the emitting die are disposed on the first portion of the second lead frame, and both the Zener diode and the emitting die electrically connects to the third lead frame.
